# EUROPEAN PATENT APPLICATION

(11) **EP 3 252 320 A1**
(43) Date of publication of application: **06.12.2017**
(21) Application number: 17172657.3
(22) Date of filing: 24.05.2017
(51) Int. Cl.: F16B 2/14, F16B 5/06, F16B 37/04

(54) **COUPLING SYSTEM ON BULB-FLAT PROFILES**

(30) Priority: 31.05.2016 IT UA20163971
(71) Applicant: Guazzieri, Luciano, 65015 Montesilvano, Pescara (IT)
(72) Inventor: Guazzieri, Luciano, 65015 Montesilvano, Pescara (IT)
(74) Representative: Long, Giorgio

(57) **Abstract**

The present invention relates to a coupling system on flat-bulb profiles, in particular for naval installations.

In particular, the invention relates to a coupling device (1) for coupling with various bulb-flat-type reinforcement profiles (comprised between the minimum dimensions F1 and the maximum dimensions F2), comprising a first clamp element (2), a second clamp element (3) and a wedge element (4) movable between a lowered, or release position and a raised, or clamping position with said reinforcement profiles (from F1 to F2), wherein said wedge element (4) is slidably movable along an inclined surface (10) of said first clamp element (2).

## Description

### Field of the invention

The present invention relates to a coupling system on flat-bulb profiles, in particular for naval installations.

### Prior art

It is known to use reinforcement ribbings for increasing the strength of surfaces which are subject to high loads. In particular, the large surfaces of building structures or the like, such as bridges, sheds and so forth, require reinforcement and stiffening systems which are strong and light at the same time.

In the naval sector, reinforcement structures named "bulb-flat" profiles are used and consist of a ribbing which is installed, normally by welding, perpendicular to the plane for which support must be provided. This ribbing ends at bottom with a profile which is bulb-shaped in section and has the function of increasing the bending resistance of the bar, allowing the bar itself to be sufficiently thin, and thus light in weight. Bulb-flat profiles may have various sizes, according to the weight that the overlying surface must sustain, and are also used for reinforcing bridges and similar structures.

In the sector of naval installations, a problem which must be normally faced is how to secure the object to be installed, e.g. a lighting system, an air conditioning system, a fire-fighting device and so on, to the structure, and in particular to the ceiling. Such installation is normally carried out by welding supports of various type to the structure with non-negligible implementation time, also considering the successive mandatory paintwork remediation step.

All the issues related to the safety of the performed jobs must also be taken into account, as the workers often need to work in small spaces in presence of electricity for the welding machines, sparks during grinding phases and fumes due to paints and solvents. Considering that on a ship, in particular a cruise ship, the number of such installations is in the order of thousands, it is easy to understand how important occupational safety is and how the time factor weighs heavily on production economy.

A particularly felt problem is that of having available an installation system which facilitates operation, is cost-effective and of nearly universal use.

### Summary of the invention

The present invention makes available a coupling system on bulb-flat profiles as set out in the accompanying claims, the definitions of which form an integral part of the present description.

The coupling device of the invention is adapted to couple with a bulb-flat-type reinforcement profile, comprising a first clamp element, a second clamp element and a wedge element movable between a lowered or release position and a raised or clamping position to said reinforcement profile, wherein said wedge element is slidably movable along an inclined surface of said first clamp element.

### Brief description of the figures

Further features and advantages of the present invention will be more apparent from the following detailed description with reference to the following figures:
Figures 1A and 1B are perspective views of the coupling device of the invention, in two different steps of assembly on a reinforcement profile;
Figures 2A and 2B show the views in figures 1A and 1B, respectively, on a different reinforcement profile;
Figures 3A and 3B are side views of the coupling device of the invention, in two different steps of assembly on a reinforcement profile;
Figure 4 is a side section view of the detail of the coupling device of the invention;
figure 5 is a front view according to direction A in figure 4;
Figure 6 is a side section view of a different detail of the coupling device of the invention;
Figure 7 is a front view according to direction B in figure 6;
Figure 8 is a side section view of a third detail of the coupling device of the invention;
Figure 9 is a front view according to direction C in figure 8;
Figure 10 is a side exploded view in transparency of a different embodiment of the invention;
Figure 11 is a plant view along direction XI-XI of figure 10 of a particular of the embodiment of figure 10;
Figure 12 is a front view along direction XII-XII of figure 10 of a particular of the embodiment of figure 10.

### Detailed description of the invention

With reference to the figures, the coupling device according to the invention, indicated as a whole by reference numeral 1, forms a coupling system to a reinforcement profile of the aforesaid bulb-flat type F1, F2, and in particular to its bulb section BS.

For the sake of clarity of the following description, the reinforcement profile F1, F2 comprises a ribbing CS, intended to be fixed perpendicularly to a sheet of a structure to be stiffened S, and a bulb section BS having an inclined connection surface SR.

The coupling device 1 comprises a first clamp element 2, a second clamp element 3 and a wedge element 4 movable between a lowered, or release position, and a raised, or clamping position to said reinforcement profile.

The first clamp element 2 is hook-shaped in section and includes a U-shaped portion 5 which surrounds a groove 6, wherein the groove 6 is defined by a first sideboard 7, by a second sideboard 8 and by a bottom 9.

The development in height of the first sideboard 7 is smaller than the second sideboard 8 and the first sideboard has, on the side facing towards the groove 6, a surface 10 inclined by an angle α with respect to the vertical, thereby creating an upward tapering. In some embodiments, the angle α is comprised between 17° and 19°.

The first sideboard 7 further comprises a slit 11, typically arranged in a central position and extending to the upper edge 12 of the first sideboard 7.

The second sideboard 8 has, on the side facing the groove 6, a vertical surface, which comprises an oblong-shaped eyelet 13 arranged vertically, in alignment with the slit 11 of the first sideboard 7.

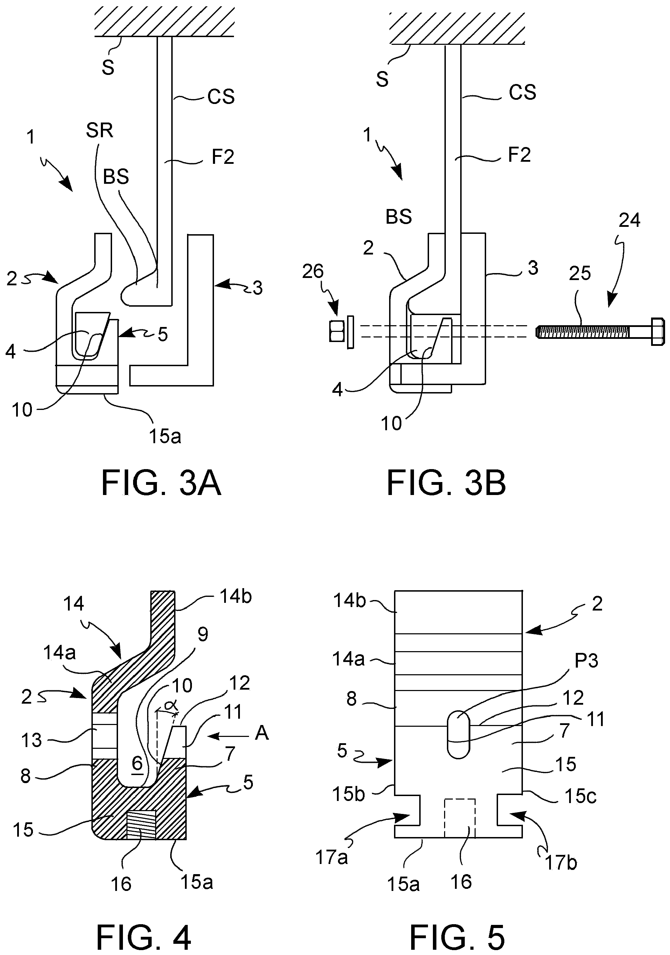

A contrast portion 14 branches off the upper end of the second sideboard 8, which contrast portion comprises a first section 14a, inclined so as to project on the groove 6, and a second section 14b extending vertically. As shown in figures 3A and 3B, the first section 14a and the second section 14b of the contrast portion 14 are intended to correspond and insist, respectively, on the connection surface SR and on a section of the ribbing CS of the reinforcement profile F1, F2. So, the inclination of the first section 14a of the contrast portion 14 of the first clamp element 2 is substantially equal to the inclination of the connection surface SR, the latter being in common for the all the different sizes of the reinforcement profile F1, F2, as shown in the figures. The U-shaped portion 5 of the first clamp element 2 comprises a base body 15 on the lower surface 15a of which a threaded hole 16, typically a blind hole, is made. Such threaded hole 16 is used for fixing a ceiling installation, e.g. a lamp or other service device, by screwing.

The base body 15 further comprises side surfaces 15b, 15c, which comprise a horizontal groove 17a, 17b. Two horizontal grooves 17a, 17b may have a squared C-shaped, a rounded C-shaped, dovetail or inverted-U-shaped section.

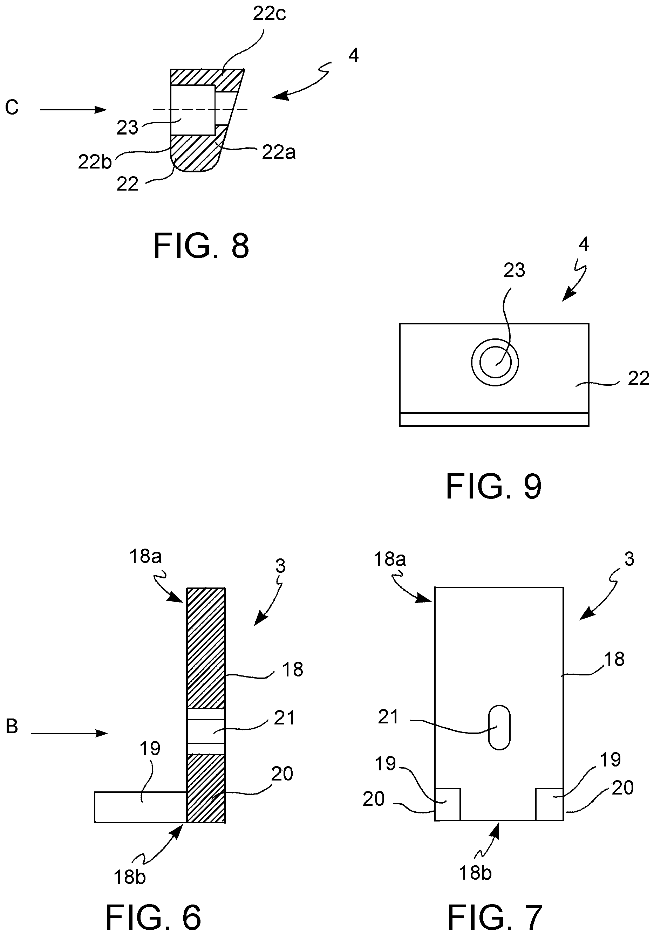

The second clamp element 3 (figures 6 and 7) comprises a vertical plate 18, having an upper end 18a and a lower end 18b. At the sides 20 of the lower end 18b, two bars 19 extend perpendicularly, having shape and size corresponding to those of the horizontal grooves 17a, 17b of the first clamp element 2 and intended to slidably insert therein.

The vertical plate 18 comprises an eyelet 21 having shape and size corresponding to those of the eyelet 13 of the first clamp element 2 and which is aligned therewith when the first and the second clamp elements 2,3 are coupled (figure 3B).

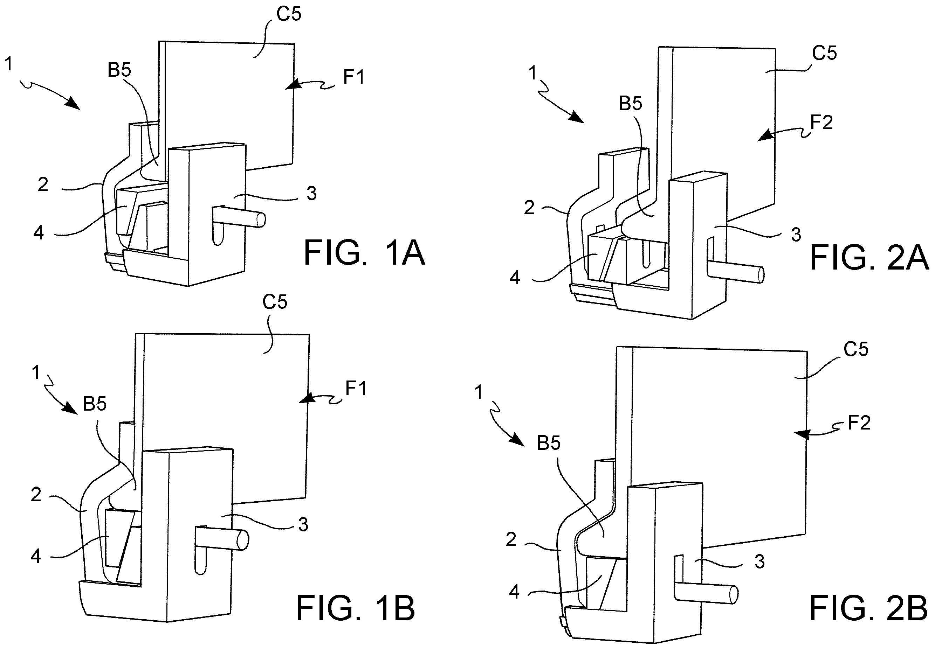

With reference to figures 8 and 9, the wedge element 4 comprises a body 22 which comprises a threaded through hole 23. The shape and size of the body 22 is such to couple with the groove 6 of the first clamp element 2 (figures 1A, 2A, 1B, 2B, 3A and 3B). So, the body 22 comprises a first side 22a inclined with respect to the vertical by the same angle α as the inclined surface 10 of the first clamp element 2. The body 22 further comprises a second side 22b, substantially vertical, and a flat upper surface 22c.

When the coupling device 1 is assembled, the hole 23 is aligned with the eyelets 13, 21 and with the slit 11.

The coupling device 1 further comprises clamping means 24, typically a screw 25 - nut screw 26 system, as shown in figure 3B, which is inserted through the eyelets 13, 21 and the slit 11 and is engaged by screwing in the threaded through hole 23 of the wedge element 4.

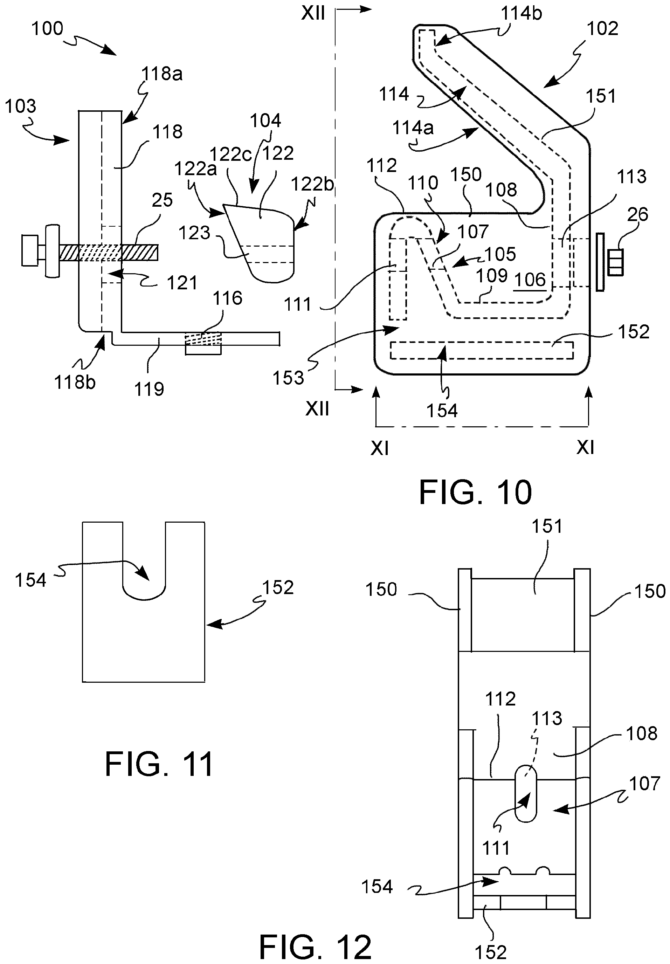

Figures 10 to 12 show a different embodiment of the invention.

In this case too, the coupling device 101 comprises a first clamp element 102, a second clamp element 103 and a wedge element 104 movable between a lowered, or release position, and a raised, or clamping position to said reinforcement profile.

The first clamp element 102 comprises two lateral plates 150 enclosing a profile 151 being hook-shaped in section and including a U-shaped portion 105 which surrounds a groove 106, wherein the groove 106 is defined by a first sideboard 107, by a second sideboard 108 and by a bottom 109.

The development in height of the first sideboard 107 is smaller than the second sideboard 108 and the first sideboard has, on the side facing towards the groove 106, a surface 110 inclined by an angle α with respect to the vertical, thereby creating an upward tapering. In some embodiments, the angle α is comprised between 17° and 19°.

The first sideboard 107 further comprises a slit 111, typically arranged in a central position and extending to the upper edge 112 of the first sideboard 107.

The second sideboard 108 has, on the side facing the groove 106, a vertical surface, which comprises an oblong-shaped eyelet 113 arranged vertically, in alignment with the slit 111 of the first sideboard 107. A contrast portion 114 branches off the upper end of the second sideboard 108, which contrast portion comprises a first section 114a, inclined so as to project on the groove 106, and a second section 114b extending vertically, the function of which is the same as the one described previously about the first embodiment.

Between the two lateral plates 150 of the first clamp element 102 a base plate 152 is also arranged, which is arranged horizontally below profile 151 e separated from it to form a slit 153.

The base plate 152 has a groove 154 facing the side of the first clamp element 102 designed to couple with the second clamp element 103.

The second clamp element 103 comprises a vertical plate 118, having an upper end 118a and a lower end 118b. From the lower end 118b, a bar 119 extends perpendicularly, having shape and size corresponding to that of the groove 154 of the first clamp element 102 and intended to slidably insert therein.

The bar 119 comprises a threaded hole 116 for screw fixing a ceiling installation, such as a lamp or other service devices.

The vertical plate 118 comprises an eyelet 121 having shape and size corresponding to those of the eyelet 113 of the first clamp element 102 and which is aligned therewith when the first and the second clamp elements 102,103 are coupled.The wedge element 104 comprises a body 122 which comprises a threaded through hole 123. The body 122 comprises a first side 122a inclined with respect to the vertical by the same angle α as the inclined surface 110 of the first clamp element 102. The body 122 further comprises a second side 122b, substantially vertical, and a flat upper surface 122c. When the coupling device 101 is assembled, the hole 123 is aligned with the eyelets 113, 121 and with the slit 111.

The coupling device 101 further comprises clamping means 24, typically a screw 25 - nut screw 26 system, which is inserted through the eyelets 113, 121 and the slit 111 and is engaged by screwing in the threaded through hole 123 of the wedge element 104.

The operation of the coupling device 1, 101 is apparent from the figures. After the first clamp element 2, 102, the wedge element 4, 104 and the second clamp element 3, 103 are assembled about the bulb portion BS of a reinforcement profile F1, F2, the screw 25 is inserted so as to cross the entire device passing through the eyelets 13, 113; 21, 121 and through the slit 11, 111 and engaging with the threaded through hole 23, 123 of the wedge element 4, 104. As the screw-nut screw system is gradually tightened, screwing the screw 25 into the threaded through hole 23, 123, the wedge element 4, 104 will naturally tend to move up by reaction between the inclined side 22a, 122a in the body 22, 122 and the inclined surface 10, 110 of the first clamp element 2, 102. The presence of the eyelets 13, 113; 21, 121 and of the slit 11, 111 has the purpose of allowing the vertical displacement of the wedge element 4, 104 - screw assembly 25. When the screw-nut screw system is totally tightened, the upper surface 22c, 122c of the wedge element 4, 104 will insist on the lower surface of the bulb portion BS of the reinforcement profile F1, F2. Such bulb portion BS, in combination with a first segment of the ribbing CS, will be tightly enclosed by the coupling device 1, 101 of the invention, which then ensures a stable gripping to the reinforcement profile F1, F2. So, at the end, the nut screw 26 will be engaged to block the assembly.

So, any installation can be conveniently mounted, e.g. a couplable screw system with the threaded hole 16, 116 arranged on the first clamp element 2 or on the second clamp element 103, using one or more coupling devices 1, 101 according to the invention.

Thus, practically, the inventive device is different fro the known devices for being able to press the bulb portion BS along two mutually perpendicular directions, one laying on a horizontal plane which is parallel to the plane of the lower surface of the bulb portion BS, the other being perpendicular to the plane of this latter. This allows both a secure gripping and a scarce or even no tendency of the device - and thus of the installations mounted thereon - to pivot.

In some embodiments, the threaded hole 16, 116 may be replaced by other fixing or coupling systems, such as precisely a hook, an eyelet or an interlocking system. The play and the wide travel allowed by the wedge element 4, 104 in the groove 6, 106 of the first clamp element 2, 102 make it possible to fit the coupling device 1, 101 onto reinforcement profiles F1, F2 of various size, thus configuring the coupling device 1, 101 of the invention as a substantially universally system. Given the high number of dimensional variants that the reinforcement profiles F1, F2 of the bulb-flat type may have, it will be necessary at most to provide a set of coupling devices 1, 101, in which each coupling device 1 covers a given interval of size of the bulb-flat profile.

It is apparent that only some particular embodiments of the present invention have been described, to which a person skilled in the art will be able to make all the changes necessary to adapt it to particular applications, without because of this departing from the scope of protection of the present invention.

## Claims

1. Coupling device (1, 101) for coupling with a bulb-flat-type reinforcement profile (F1, F2), comprising a first clamp element (2, 102), a second clamp element (3, 103) and a wedge element (4, 104) movable between a lowered or release position and a lifted or tightening position to said reinforcement profile (F1, F2), wherein said wedge element (4, 104) is slidably movable along an inclined surface (10, 110) of said first clamp element (2, 102).

2. Coupling device (1, 101) according to claim 1, wherein the first clamp element (2, 102) includes a U-shaped portion (5, 105) surrounding a groove (6, 106) adapted to accommodate the wedge element (4, 104), wherein the groove (6, 106) is defined by a first sideboard (7, 107), by a second sideboard (8, 108) and by a bottom (9, 109) and wherein the first sideboard (7, 107) comprises, on the side facing the groove (6, 106), said inclined surface (10, 110), thereby creating a tapering upwards.

3. Coupling device (1, 101) according to claim 2, wherein said inclined surface (10, 110) forms an angle α of between 17° and 19° with the vertical.

4. Coupling device (1, 101) according to claim 2 or 3, wherein the first sideboard (7, 107) comprises a slit (11, 111) extending up to the upper edge (12, 112) of the first sideboard (7, 107).

5. Coupling device (1, 101) according to any one of claims 2 to 4, wherein the second sideboard (8, 108) comprises, on the side facing the groove (6, 106), a vertical surface which comprises an oblong eyelet (13, 113) arranged vertically, in alignment with the slit (11, 111) of the first sideboard (7, 107).

6. Coupling device (1, 101) according to claim 5, wherein a contrast portion (14, 114) branches off the upper end of the second sideboard (8, 108), which contrast portion (14, 114) comprises a first section (14a, 114a) which is inclined so as to project on the groove (6, 106), and a second section (14b, 114b) extending vertically, wherein said contrast portion (14, 114) is adapted to correspond to a portion of the reinforcement profile (F1, F2).

7. Coupling device (1) according to any one of claims 2 to 6, wherein the U-shaped portion (5) of the first clamp element (2) comprises a base body (15), whose lower surface (15a) comprises coupling means such as a threaded hole (16), a hook, an eyelet or an interlocking system, the base body (15) further comprising side surfaces (15b, 15c) which comprise a horizontal groove (17a, 17b).

8. Coupling device (1) according to any one of claims 1 to 7, wherein the second clamp element (3) comprises a vertical plate (18), having an upper end (18a) and a lower end (18b) wherein, at the sides (20) of the lower end (18b), two bars (19) extend perpendicularly, having shape and size corresponding to those of the horizontal grooves (17a, 17b) of the first clamp element (2) and intended to slidably insert therein.

9. Coupling device (101) according to any one of claims 1 to 6, wherein the first clamp element (102) comprises two lateral plates (150) enclosing a profile (151) being hook-shaped in section and including a U-shaped portion (105) which surrounds a groove (106), wherein the groove (106) is defined by a first sideboard (107), by a second sideboard (108) and by a bottom (109).

10. Coupling device (101) according to claim 9, wherein, between the two lateral plates (150) of the first clamp element (102), a base plate (152) is arranged, which is arranged horizontally below profile (151) e separated from it to form a slit (153), the base plate (152) having a groove (154) facing the side of the first clamp element (102) designed to couple with the second clamp element (103).

11. Coupling device (101) according to claim 10, wherein the second clamp element (103) comprises a vertical plate (118), having an upper end (118a) and a lower end (118b), wherein from the lower end (118b), a bar (119) extends perpendicularly, having shape and size corresponding to that of the groove (154) of the first clamp element (102) and intended to slidably insert therein, and wherein the bar (119) comprises a threaded hole (116) for screw fixing a ceiling installation, such as a lamp or other service devices.

12. Coupling device (1) according to any one of claims 8 to 11, wherein the vertical plate (18, 118) comprises an eyelet (21, 121) having shape and size corresponding to those of the eyelet (13, 113) of the first clamp element (2, 102) and which is aligned therewith when the first and the second clamp element (2, 102; 3, 103) are coupled.

13. Coupling device (1, 101) according to any one of claims 1 to 12, wherein the wedge element (4, 104) comprises a body (22, 122) which comprises a threaded through hole (23, 123), the body (22, 122) comprising a first side (22a, 122a) inclined with respect to the vertical by the same angle α of the inclined surface (10, 110) of the first clamp element (2, 102), a second side (22b, 122b) and a flat upper surface (22c, 122c).

14. Coupling device (1, 101) according to any one of the preceding claims, further comprising clamping means (24) or a screw (25) - nut screw (26) system which is insertable through the eyelet (13, 113) and the slit (11, 111) of the first clamp element (2, 102) and through the eyelet (21, 121) of the second clamp element (3, 103) and engages by screwing in the threaded through hole (23, 123) of the wedge element (4, 104), in such a way that the clamping of said clamping means (24) causes the wedge element (4, 104) to move from said lowered or release position to said raised or clamping position.
